# EUROPÄISCHE PATENTSCHRIFT

(11) **EP 0 968 584 B1**
(45) Veröffentlichungstag und Bekanntmachung des Hinweises auf die Patenterteilung: **21.04.2004**
(21) Anmeldenummer: 98909308.3
(22) Anmeldetag: 31.01.1998
(51) Int. Cl.: H04L 1/08, H04L 27/26

(54) **VERFAHREN ZUR REDUZIERUNG VON REDUNDANTEN ÜBERTRAGUNGEN VON DATENGRUPPEN**
METHOD FOR REDUCING REDUNDANT TRANSMISSIONS OF DATA GROUPS
PROCEDE POUR REDUIRE LES TRANSMISSIONS REDONDANTES DE GROUPES DE DONNEES

(30) Priorität: 22.03.1997 DE 19712144
(43) Veröffentlichungstag der Anmeldung: 05.01.2000
(73) Patentinhaber: ROBERT BOSCH GMBH, 70442 Stuttgart (DE)
(72) Erfinder: MEYER, Erik, D-09125 Chemnitz (DE)
(86) Internationale Anmeldenummer: PCT/DE1998/000279
(87) Internationale Veröffentlichungsnummer: WO 1998/043382

(56) Entgegenhaltungen:
- WO-A-86/03317
- WO-A-93/06671
- WO-A-93/15562
- GB-A- 2 033 699

## Beschreibung

### Stand der Technik

Die Erfindung geht aus von einem Verfahren zur Reduzierung von redundanten Übertragungen von Datengruppen in einem Multiträgerübertragungsverfahren nach der Gattung des Hauptanspruchs.

Aus der ETS 300401 Seite 36ff ist bekannt, daß Daten für die digitale Rundfunkübertragung (DAB) in einem sogenannten Main Service Channel (MSC) übertragen werden. In diesem Kanal, werden die Daten in zwei unterschiedlichen Art und Weisen übertragen. Im sogenannten Stream Mode werden kontinuierliche Daten, z.B. Audiodaten übertragen. Der sogenannte Pakket-Mode erlaubt es, die Daten in einer Paketstruktur zu übertragen. Datenpakete mit gleicher Adresse werden zu sogenannten Datengruppen zusammengefaßt und übertragen. Im DAB-Empfänger wird aus dem gesamten Datenstrom der Anteil der im Packet-Mode übertragenen Daten getrennt und im Paketdekoder entschlüsselt. Um die Datenpakete mit einer größtmöglichen Sicherheit zu übertragen, können die einzelnen Datengruppen bei der Übertragung wiederholt werden. Die Anzahl der noch zu erwartenden Wiederholungen teilt der Sender dem Empfänger mit. Der Datenpaketdekoder des DAB-Empfängers liest die Datengruppen und verwirft Datengruppen, die fehlerhaft übertragen wurden. Dazu sind die Datengruppen mit einer zyklischen Blockprüfsumme versehen.

Des weiteren ist aus der WO-A-8 603 317 bekannt, redundante Datenpakete anhand von Kontrollbits zu analysieren und aus ihnen eine möglichst fehlerfreie Datengruppe zu rekonstruieren.

### Vorteile der Erfindung

Das erfindungsgemäße Verfahren mit den kennzeichnenden Merkmalen des Hauptanspruchs hat demgegenüber den Vorteil, daß die Anzahl an redundanten Übertragungen reduziert wird, da im Dekoder nicht einfach einzelne Datenpakete, die fehlerhaft übertragen wurden, verworfen werden, sondern mindestens zwei fehlerhafte Datengruppen gleichen Inhalts ausgewertet werden und aus ihnen eine korrekte Datengruppe rekonstruiert wird. Um zu überprüfen ob ein Datenpaket korrekt' rekonstruiert wurde, wird der Datengruppen-Fehlerschutz ausgewertet.

Durch die in den Unteransprüchen aufgeführten Maßnahmen ist eine vorteilhafte Weiterbildung und Verbesserung des im Hauptanspruch angegebenen Verfahrens möglich.

Besonders vorteilhaft ist es, daß die Datengruppen rekonstruiert werden, indem ein Vergleich der Inhalte feststellt, an welcher Stelle eine fehlerhafte Übertragung aufgetreten ist. Dadurch ist es auf einfache Weise möglich, die fehlerhaft übertragene Stelle zu eliminieren und durch eine korrekte Folge von Datenpaketen zu ersetzen. Die Überprüfung, wann eine Übereinstimmung der Datenpakete vorliegt, erfolgt, indem eine Mindestanzahl an Bytes überprüft und als identisch erkannt werden müssen. Das erfindungsgemäße Verfahren mischt stets das kürzere Stück der Datengruppe in ein bereits vorhandenes längeres Stück einer zweiten Datengruppe.

### Zeichnung

Ein Ausführungsbeispiel der Erfindung ist in der Zeichnung dargestellt und in der nachfolgenden Beschreibung näher erläutert. Es zeigt Figur 1 die Struktur einer Datengruppe, Figur 2 einen DAB-Empfänger und Figur 3 ein Ablaufschema zur Bestimmung korrekter Datengruppen.

### Beschreibung des Ausführungsbeispiels

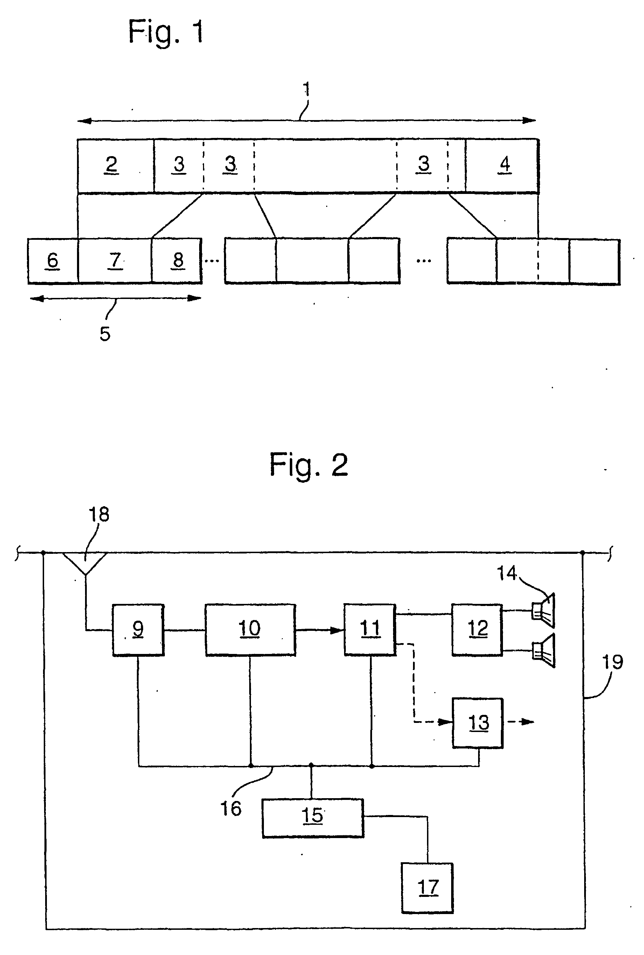

Figur 1 zeigt eine Datengruppe 1, die aus einem Datengruppen-Header 2 sowie aus einer Folge von Daten 3 besteht. Den Abschluß der Datengruppe 1 bildet ein Datengruppen-Fehlerschutzfeld 4, z.B. ein CRC (Cyclic Redundancy Code). Die Datengruppe 1 wird in Datenpaketen 5 definierter Länge übertragen. Die Datenpakete 5 bestehen aus einem Paket-Header 6 aus den Paketdaten 7 und dem Paket-Fehlerschutzfeld 8.

Figur 2 zeigt einen DAB-Empfänger 19. Die Antenne 18 des Empfängers 19 ist an eine Empfangseinheit 9 angeschlossen, die mit einem OFDM (Orthogonal Frequency Division Multiplex)-Demodulator 10 und einem Kontrollbus 16 in Verbindung steht. Der OFDM-Demodulator 10 ist ebenfalls mit dem Kontrollbus 16 verbunden und weist einen zweiten Ausgang, der mit einem Kanaldekoder 11 in Verbindung steht, auf. Auch der Kanaldekoder 11 ist an den Kontrollbus angeschlossen. Der Kanaldekoder 11 ist mit einem Audiodekoder 12 und dieser mit Lautsprechern 14 verbunden. Ein zweiter Ausgang des Kanaldekoders 11 liegt am Paketdekoder 13 an. Auch der Paketdekoder ist mit dem Kontrollbus 16 verbunden. Der Kontrollbus 16 weist eine Verbindung zum Controller 15 auf, an dessen Ausgang eine Eingabe/Ausgabeeinheit 17 anliegt.

Von der Antenne 18 werden die DAB-Signale empfangen und in der analogen Empfangseinheit 9 verarbeitet und digitalisiert. Die digitalisierten Signale gelangen zum OFDM-Demodulator, und werden dort in.den Anteil des FIC (First Information Channel), und in den Main Service Channel (MSC) aufgespalten. Die Informationen, die im FIC enthalten sind werden über den Kontrollbus 16 und den Controller 15 sofort an die Eingabe/Ausgabeeinheit 17 weitergegeben. In der Eingabe- Ausgabeeinheit können die Informationen sofort als Entscheidungskriterien zur Auswahl der weiteren Daten zur Verfügung stehen. Die Daten MSC gelangen zum Kanaldekoder 11, in dem sie in die Daten des Stream-Mode und die Daten des Packet-Mode getrennt werden. Die Audiodaten des Stream-Mode gelangen in den Audiodekoder 12 und werden über Lautsprecher 14 wiedergegeben. Handelt es sich bei den Daten um Daten, die im Packet-Mode übertragen werden, gelangen sie vom Kanaldekoder 11 in den Paketdekoder 13. Der Paketdekoder hat die Aufgabe, die in Datengruppen angeordneten Datenpakete zu lesen und deren Informationen als unabhängige Daten für die weitere Verarbeitung zur Verfügung zu stellen. Alle im DAB-Verfahren übertragenen Daten sind durch den mobilen Empfang und die wechselnden Empfangs- und Sendeverhältnisse Störungen unterworfen. Daten, die im MSC fehlen, fallen bei der Audiowiedergabe kaum ins Gewicht. Zusatzdaten die im Packet-Mode übertragen werden, werden zur Erhöhung der Übertragungssicherheit wiederholt übertragen. Die Häufigkeit der Wiederholung wird vom Sender festgelegt. Geht eine Datengruppe im Packet-Mode verloren, gibt es keine Möglichkeit die Daten zu rekonstruieren. Da eine sehr häufige Wiederholung der Datengruppen allerdings keine effektive Datenübertragung ermöglicht, müssen bezüglich der Empfangssicherheit Kompromisse eingegangen werden. Das erfindungsgemäße Verfahren geht von einer geringen Anzahl an Wiederholungen der Datengruppen aus. Dem Paketdekoder 13 wird vorab signalisiert, daß Datengruppen 1 gesendet werden, wobei jede Datengruppe beispielsweise zweimal übertragen wird. Der Paketdekoder 13 empfängt die erste Datengruppe und stellt über ihr Datengruppen-Fehlerschutzfeld 4 fest, ob die Datengruppe 1 korrekt empfangen wurde. Wurde die Datengruppe 1 nicht korrekt empfangen, bleiben die Daten der Datengruppe 1 im Paketdekoder 13 gespeichert. Der Paketdekoder 13 liest die zweite Datengruppe, die denselben Inhalt wie die erste Datengruppe aufweist, und stellt über das Datengruppen-Fehlerschutzfeld 4 fest, ob sie korrekt empfangen wurde. Wurde auch die zweite Datengruppe nicht korrekt empfangen beginnt der Dekoder mit dem Rekonstruieren einer korrekten Datengruppe aus den beiden nicht korrekt empfangenen Datengruppen.

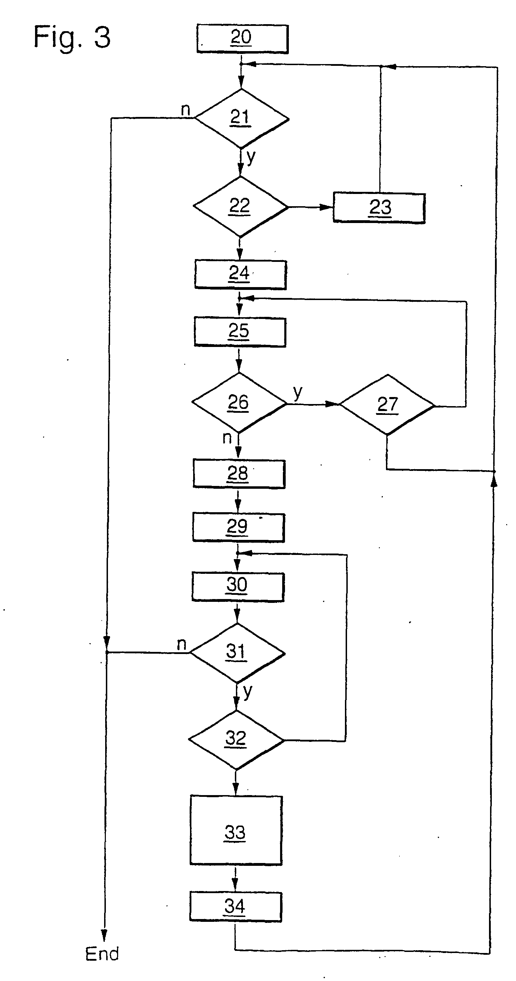

In Figur 3 wird der Ablauf des Verfahren schematisch dargestellt, der zur Rekonstruierung einer korrekten Datengruppe angewendet wird.
Dabei bedeutet:
- 20:: Setzen der Positionen des kurzen und des langen Buffers auf 0
- 21:: Testen, ob die aktuellen Positionen kleiner als die Bufferlähgen sind
- 22:: Vergleich der Bufferinhalte an aktuellen Positionen
- 23:: Weiterrücken der aktuellen Positionen im kurzen und langen Buffer um einen Schritt
- 24:: Feststellen der aktuellen Position des langen Buffers und Speichern der aktuellen Position P_{old} des langen Buffers
- 25:: Weiterrücken der Position des langen Buffers um einen Schritt
- 26:: Testen, ob die aktuelle Position des langen Buffers kleiner als die Bufferlänge ist
- 27:: Vergleich von 19 Bytes ab den aktuellen Positionen beider Buffer
- 28:: Setzen der aktuellen Position des langen Buffers auf den Wert P_{old}
- 29:: Festhalten der Position des kurzen Buffers und Speichern der Position P_{kurz}
- 30:: Weiterrücken der aktuellen Position des kurzen Buffers um einen Schritt
- 31: Testen, ob aktuelle Position des kurzen Buffers kleiner als die Bufferlänge des kurzen Buffers ist
- 32:: Vergleich von 19 Bytes ab den aktuellen Positionen beider Buffer
- 33:: Mische Bereich aus dem kurzen Buffer von der Position P_{kurz} bis zur aktuellen Position des kurzen Buffers hinter die aktuelle Position des langen Buffers
- 34:: Setze die aktuelle Position des langen Buffers um die Länge des kopierten Bereichs weiter.

Die mit dem Verfahren zu korrigierenden Fehler beschränken sich auf fehlende Stücke innerhalb der Datengruppen. Die innerhalb der Datengruppe enthaltenen Datenpakete 5 sind mit hoher Wahrscheinlichkeit korrekt empfangen, weil die Datenpakete mit das Datenpaket-Fehlerschutzfeld 8 auf ihre Korrektheit überprüft wurden. Das Problem besteht darin, beim Vergleich zweier Datengruppen 1 zu erkennen, welche Datenpakete fehlen, da die Datenpakete keine absolute Nummerierung enthalten, sondern lediglich Bits gesetzt sind, die aussagen, ob das Paket das erste, ein mittleres oder das letzte Paket ist. Falls sich beide Datengruppen ab einer bestimmten Position unterscheiden, ist zu entscheiden, in welcher Datenpakete fehlen und wieviele es sind. Bei dem verwendeten Verfahren wird auf Übereinstimmung der Datengruppen geschlossen, wenn sich beide Datengruppen, nachdem ein Unterschied festgestellt wurde, ab einer späteren Position über eine festgesetzte Länge gleichen. Als Länge wurde die Anzahl von Daten, die im kleinstmöglichen Paket übertragen werden gewählt. Bei der Verwendung dieses Kriteriums ist es notwendig, daß die Datengruppen bzw. der Datenstrom wenig Redundanz enthält. Längere Bytefolgen dürfen nicht mehrmals auftreten, da sonst dieses Entscheidungskriterium nicht mehr greift. Es wird aber davon ausgegangen, daß die Daten aus Kapazitätsgründen vor der Übertragung gepackt werden. Damit enthalten die Daten kaum Redundanz, so daß dieses Kriterium keine Einschränkung für die Anwendung des Verfahrens bedeutet. Das in Figur 3 dargestellte Verfahren prüft Schritt für Schritt den Dateninhalt der Datengruppen ab. Solange die Inhalte der beiden Datengruppen identisch sind, wird Schritt 21, 22 und 23 immer wieder wiederholt. Wird nach dem Vergleich der Bufferinhalte an der aktuellen Position in Schritt 22 eine Abweichung festgestellt, beginnt der Test, ob ein Stück im kurzen Buffer fehlt d.h. beim schrittweise Weiterrücken der Position im kurzen Buffer müßte anschließend wieder eine Gleichheit festgestellt werden. Dieser Test erfolgt in den Schritten 25, 26 und 27 solange bis entschieden ist, ob im weiteren Verlauf der Buffer wieder Gleichheit festgestellt werden kann. Wird im Schritt 27 nach 19 Bytes gemessen von den aktuellen Bufferpositionen Gleichheit des Inhalts festgestellt, bedeutet das, daß im kurzen Buffer ein Stück gefehlt hat. Wird nach 19 Bytes keine Gleichheit festgestellt, muß in dem Schritten 28, 29 festgestellt werden, ob im langen Buffer ein Stück fehlt oder ob das fehlende Stück im kurzen Buffer länger als 19 Bytes war. Im Schritt 31 wird entschieden, ob im kurzen Buffer ein zu großes Stück fehlt. Wird diese Feststellung getroffen, kann das Verfahren keine korrekte Datengruppe rekonstruieren, das Verfahren ist beendet. Wird dagegen festgestellt, daß im kurzen Buffer kein zu großes Stück fehlt, werden im Schritt 32 wieder 19 Bytes ab den aktuellen Bufferpositionen verglichen. Wird die Gleichheit festgestellt bedeutet das, daß im langen Buffer ein Stück fehlt. Im Schritt 33 und 34 wird der ermittelte Bereich aus dem kurzen Buffer genommen und an der aktuellen Position an den langen Buffer angefügt. Das Verfahren ist beendet, wenn die gesamte Datengruppe in dieser Art und Weise rekonstruiert wurde und das Datengruppen-Fehlerschutzfeld 4 fehlerfrei ausgelesen werden kann.

## Patentansprüche

1. Verfahren zur Reduzierung von redundanten Übertragungen von Datengruppen (1), bestehend aus Datengruppen-Header (2), Daten (3) und einem Datengruppen-Fehlerschutzfeld (4), in einem Multiträgerübertragungsverfahren, wobei die Datengruppen (1) aus einer Vielzahl von Datenpaketen (5) bestehen, wobei eine Datengruppe (1) über das Datengruppen-Fehlerschutzfeld (4) als fehlerhaft erkannt wird, wenn eines der Datenpakete (5) fehlerhaft übertragen wurde, **dadurch gekennzeichnet, daß** mindestens zwei fehlerhafte Datengruppen (1) gleichen Inhalts in einem Paketdekoder (13) im Empfänger (19) ausgewertet werden und aus ihnen eine korrekte Datengruppe aus einer Folge korrekter Datenpakete (5) rekonstruiert wird, so daß das Datengruppen-Fehlerschutzfeld (4) fehlerfrei ausgelesen wird.

2. Verfahren zur Reduzierung von redundanten Übertragungen nach Anspruch 1, **dadurch gekennzeichnet, daß** die fehlerhaften Datengruppen gleichen Inhalts in Paketdekoder (13) zwischengespeichert werden und daß durch Vergleich der Inhalte der Datenpakete (5) festgestellt wird, an welcher Stelle und wieviele Datenpakete (5) fehlerhaft übertragen wurden.

3. Verfahren zur Reduzierung von redundanten Übertragungen nach Anspruch 1 oder 2, **dadurch gekennzeichnet, daß** eine Übereinstimmung der Datengruppen (1) festgestellt wird, wenn eine Mindestanzahl an Bytes jeder Datengruppe als identisch erkannt wird.

4. Verfahren zur Reduzierung von redundanten Übertragungen nach Anspruch 1 bis 3, **dadurch gekennzeichnet, daß** zu einem fehlerfreien längeren Stück einer ersten Datengruppe ein kürzeres Stück der zweiten Datengruppe gemischt wird.

5. Paketdekoder (13) zur Reduzierung von redundanten Übertragungen von Datengruppen (1), bestehend aus Datengruppen-Header (2), Daten (3) und einem Datengruppen-Fehlerschutzfeld (4), in einem Multiträgerübertragungsverfahren, wobei die Datengruppen (1) aus einer Vielzahl von Datenpaketen (5) bestehen, wobei eine Datengruppe (1) über das Datengruppen-Fehlerschutzfeld (4) als fehlerhaft erkannt wird, wenn eines der Datenpakete (5) fehlerhaft übertragen wurde, **dadurch gekennzeichnet, daß** der Dekoder Mittel zum Zwischenspeichern, Vergleichen und Rekonstruieren von Datengruppen enthält, die mindestens zweimal mit gleichem Inhalt übertragen wurden und daß die Datengruppe so rekonstruiert ist, daß das Datengruppen-Fehlerschutzfeld (4) fehlerfrei auslesbar ist.

## Claims

1. Method for reducing redundant transmissions of data groups (1), comprising data-group header (2), data (3) and a data-group error-protection field (4), in a multicarrier transmission method, the data groups (1) comprising a multiplicity of data packets (5), where a data group (1) is identified as being erroneous from the data-group error-protection field (4) if one of the data packets (5) has been transmitted erroneously, **characterized in that** at least two erroneous data groups (1) with the same content are evaluated in a packet decoder (13) in the receiver (19) and are used to reconstruct a correct data group from a succession of correct data packets (5), so that the data-group error-protection field (4) can be read without any error.

2. Method for reducing redundant transmissions according to Claim 1, **characterized in that** the erroneous data groups with the same content are buffer-stored in packet decoder (13) and **in that** comparison of the contents of the data packets (5) establishes at what point and how many data packets (5) have been transmitted erroneously.

3. Method for reducing redundant transmissions according to Claim 1 or 2, **characterized in that** a match between the data groups (1) is established if a minimum number of bytes in each data group is identified as being identical.

4. Method for reducing redundant transmissions according to Claim 1 to 3, **characterized in that** an error-free relatively long piece of a first data group has a shorter piece of the second data group mixed with it.

5. Packet decoder (13) for reducing redundant transmissions of data groups (1), comprising data-group header (2), data (3) and a data-group error-protection field (4), in a multicarrier transmission method, the data groups (1) comprising a multiplicity of' data packets (5), where a data group (1) is identified as being erroneous from the data-group error-protection field (4) if one of the data packets (5) has been transmitted erroneously, **characterized in that** the decoder contains means for buffer-storing, comparing and reconstructing data groups which have been transmitted at least twice with the same content and **in that** the data group is reconstructed such that the data-group error-protection field (4) can be read without any error.

## Revendications

1. Procédé pour réduire les transmissions redondantes de groupes de données (1), comprenant des en-têtes de groupes de données (2), des données (3) et un champ de protection de défauts de groupes de données (4), dans un procédé de transmission à supports multiples, les groupes de données (1) comprenant une multitude de paquets de données (5), un groupe de données (1) étant identifié comme étant défectueux par le champ de protection de défauts de groupes de données (4) lorsque l'un des paquets de données (5) a été transmis de manière défectueuse,
**caractérisé en ce qu'**
au moins deux groupes de données (1) défectueux d'un même contenu sont évalués dans un décodeur de paquets (13) dans le récepteur (19), et à partir de ceux-ci un groupe de données correct est reconstruit contenant une suite de paquets de données (5) corrects, permettant de lire sans défaut le champ de protection de défauts de groupes de données (4).

2. Procédé pour réduire les transmissions redondantes selon la revendication 1,
**caractérisé en ce que**
les groupes de données défectueux d'un même contenu sont entreposés dans des décodeurs de paquets (13), et par la comparaison des contenus des paquets de données (5) on constate combien de paquets de données (5) ont été transmis de manière défectueuse et à quel endroit.

3. Procédé pour réduire les transmissions redondantes selon la revendication 1 ou 2,
**caractérisé en ce qu'**
une concordance des groupes de données (1) est constatée lorsqu'un nombre minimum d'octets de chaque groupe de données est identifié comme étant identique.

4. Procédé pour réduire les transmissions redondantes selon la revendication 1 à 3,
**caractérisé en ce qu'**
une partie longue sans défaut d'un premier groupe de données est mixée avec une partie plus courte du deuxième groupe de données.

5. Décodeur de paquets (13) pour réduire des transmissions redondantes de groupes de données (1), comprenant des en-têtes de groupes de données (2), des données (3) et un champ de protection de défauts de groupes de données (4), dans un procédé de transmission à supports multiples, les groupes de données (1) comprenant une multitude de paquets de données (5), un groupe de données (1) étant identifié comme étant défectueux par le champ de protection de défauts de groupes de données (4) lorsque l'un des paquets de données (5) a été transmis de manière défectueuse,
**caractérisé en ce que**
le décodeur comprend des moyens pour entreposer, comparer et reconstruire des groupes de données, qui ont été transmis au moins deux fois avec le même contenu, et le groupe de données est reconstruit de manière à permettre de lire sans défaut le champ de protection de défauts de groupes de données (4).
